# EUROPEAN PATENT SPECIFICATION

(11) **EP 3 898 451 B1**
(45) Date of publication and mention of the grant of the patent: **20.05.2026**
(21) Application number: 19832703.3
(22) Date of filing: 23.12.2019
(51) Int. Cl.: B65D 85/804, A47J 31/36

(54) **BEVERAGE CAPSULE**
GETRÄNKEKAPSEL
CAPSULE DE BOISSON

(30) Priority: 21.12.2018 GB 201821115
(43) Date of publication of application: 27.10.2021
(73) Proprietor: Gort-Barten, Leslie, Crawley, West Sussex RH11 7ST (GB); Gort-Barten, Alex, Crawley, West Sussex RH11 7ST (GB)
(72) Inventor: Gort-Barten, Leslie, Crawley, West Sussex RH11 7ST (GB); Gort-Barten, Alex, Crawley, West Sussex RH11 7ST (GB)
(74) Representative: JENSEN & SON
(86) International application number: PCT/EP2019/086989
(87) International publication number: WO 2020/128107

(56) References cited:
- EP-A1- 2 957 524
- WO-A2-2010/084475
- WO-A2-2014/067507

## Description

The invention relates to a beverage capsule for an espresso machine, in particular for making espresso under high pressure.

Powered espresso machines are well known. The conventional espresso machine comprises a water chamber, a heating element adapted to heat the water to around 95-98 C, which is then pumped under high pressure of 15 to 19 bar to a filter holder or portafilter. Lower pressure systems also exist. The filter holder typically comprises a handle portion and a holder portion provided with two or three lugs that are adapted to engage in the installed position with the machine brewhead to where the water is pumped. The holder portion is adapted to receive a filter, which is usually a metal bowl with a number of perforations through its bottom. In use, the filter is filled with finely ground coffee and the water is forced through the coffee at the high pressure generated by the pump to produce the espresso coffee which is collected in a cup placed under the filter holder.

The classic coffee machine suffers from two potential drawbacks. The first drawback is that ground coffee starts to lose its freshness and flavour after a few days and so for the optimum espresso, the user will also need to have a coffee grinder. The other drawback is that the used espresso coffee has to be removed from the filter, which can lead to mess as the grinds are fine.

This lead to the development of ESE coffee pods, which can be used in many espresso machines. Coffee pods are generally individually wrapped to maintain freshness and consist of a small pod made of a perforated filter paper which contains the coffee. The pod is placed in the filter holder and then disposed of after use. Coffee pods are convenient but have to fit the filter holder and be placed correctly otherwise water can leak around the edge.

This in turn lead to the development of capsule machines. The coffee capsules for these machines are completely sealed. The capsule machines do not use the conventional filter holder. A capsule machine typically has a two part mechanism. The first part receives the capsule and is provided with an extraction surface upon which the capsule rests. The second part is provided with a locking lever which is used to make the first and second parts integral. In use, the second part cuts the upper surface of the capsule to allow water to enter the capsule and percolate down through the capsule, where it exits through the lower surface of the capsule at multiple locations determined by the geometry of the extraction surface. An example of such a machine is disclosed in EP 0870457 or WO2005/004683. Capsules in the known capsule coffee machines are, in use, inserted into a capsule cage of the machine which holds the capsule in position so that it may be cut by a cutting member.

Capsule machines have proved to be commercially very successful as they are very convenient to use and produce a consistent product. However, each manufacturers coffee machines and capsules are designed to work with the manufacturers own brand. The most popular brand of capsule is Nespresso ^{®}, which uses a sealed capsule made of aluminium. In use, the capsule is clamped into position in the machine with a capsule cage part holding the capsule so that it can be cut by typically three prongs to enable water under pressure to enter the coffee capsule.

Aluminium has the considerable advantage that it is oxygen and water impermeable, which means that the coffee in the capsules has a long shelf life. Aluminium however also suffers from several major drawbacks in that the aluminium is easily deformed during the filling and packing stage and it is difficult and expensive to produce a reliable seal on the capsule rim. The only known seal that works is a silicone elastomer disclosed in EP1654966 despite significant research effort. In these capsules the edge of the aluminium rim is rolled over when attached the front foil seal. The known solutions to these problems further require an extremely high capital investment beyond most companies. There are a number of plastic capsules, an example of which is shown in WO2014067507. These capsules suffer from several problems such as air leakage and blunting the blades in the coffee machines. Although it is possible to wrap the capsules in a pillow bag, this results in additional packaging.

It has been proposed to use raised ribs formed by pushing out material from the capsule rim. These seals are functional but reduce the effective sealing area on the front circumference of the capsule where the capsule is sealed with a foil. This results in unacceptably high failure rates of the foil seal so that the filled capsule degasses with the consequence that the coffee becomes stale.

A further problem with aluminium capsules arises due to the puncture of the capsule foil to allow water to pass through the coffee for extraction. The size of the holes affects the flow rate of the water into and through the capsule with the larger the hole the greater the flow rate and the smaller the hole the lower the flow rate. Controlling the flow rate is therefore important to the quality of the coffee as too slow a flow rate results in over-extraction rendering the coffee bitter and too fast a flow rate results in too weak an extraction, so the coffee lack flavour.

The present invention therefore seeks to provide an improved coffee capsule.

The objectives of the invention are achieved by a capsule in a coffee machine in accordance with the features of Claim 1

The capsule of the invention has proven to be much less likely to collapse under the action of the blades of a brewhead of a capsule coffee machine.

Exemplary embodiments of the invention will now be described with reference to the drawings, in which:
Fig. 1a shows schematically a cross section of a capsule
Fig. 1b shows schematically a cross section of the capsule
Fig. 1c shows schematically a brewhead of a coffee machine
Fig. 2 shows a perspective view of the capsule

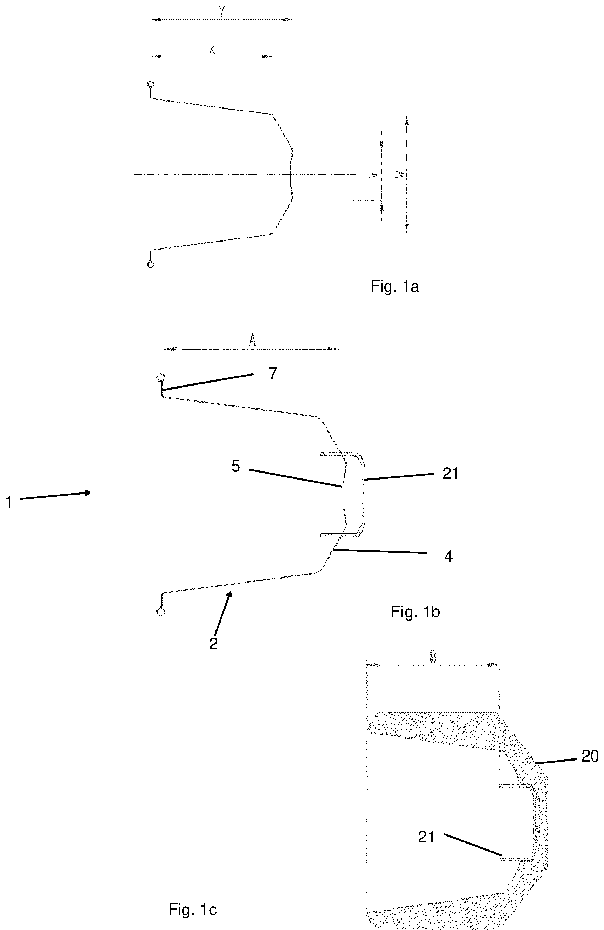

Figure 1a shows a cross-section of capsule 1 having a generally frustoconical form for the main body 2. The upper end 3 of the capsule has a second frustoconical section 4 with a smaller diameter than the lower end. The upper end 3 is further provided with an additional frustoconical indent 5 at the centre of the upper end 3. The capsule is provided with a flange 7 at the end of main body 2 remote from the upper end 3.

To ensure that the capsule functions effectively in the wide range of capsule coffee machine on the market, the four dimensions marked V, W, X and Y are critical and need to be used if problems with the insertion and ejection of the capsule in the machines is to be avoided.

Figure 1b shows a further dimension on the capsule, namely A, which the distance between the capsule sealing surface to the surface of the capsule interfacing with the machine blades top of the capsule and Figure 1c shows a dimension B, which is he distance between the coffee machine brew head 20 sealing surface and the tip of the blade 21. Dimension A varies with the thickness of the seal on the flange, whereas dimension B is determined by the capsule coffee machine design. The piercing depth of the blades is deduced by subtracting Dimension B from Dimension A.

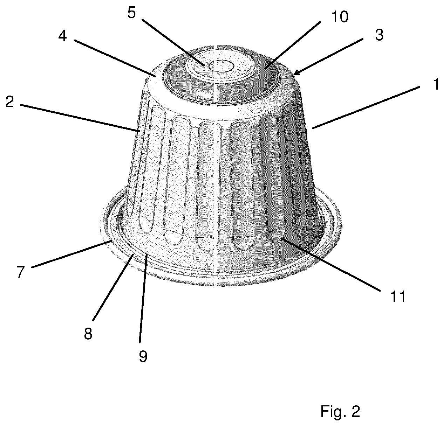

Figure 2 shows a perspective view of the capsule, which is provided with an annular protruding surface 10 outwards from the upper surface. The protruding surface 10 is chamfered or inclined but could also be a radiused surface. The protruding surface 10 provides a steeper angle than the surface 4 to the blades, which improves the entry of the blade. The flange 7 comprises an upstanding wall 8, which thereby forms a gutter 9 between the wall of the capsule and the upstanding wall 8. The upstanding wall 8 then bends back down towards the same side as the opening such that the distal end is substantially in the longitudinal plane of the capsule but below the gutter 9. The shape of the distal end forms an open hook. The open hook receives a seal to close the capsule after packing or filling. The open hook shape provides a plurality of webs at the rim of the flange which provide a degree of reinforcement so that the foil can be easily attached to the capsule made of softer, more ductile materials such as aluminium.

The annular surface 10 is raised from the surrounding plane of the capsule surface 12 by between 0.15 and 0.35mm and in a particularly preferred embodiment 0.25mm. The surface has a width of around 0.2-0.3mm, to allow for tolerances between machines. The angle of the surface to the planar surface of the capsule is between 30 and 34° with the angle increasing from the centre to the to the edge of the capsule Within the range of heights of the protruding surface, the blades of the brew head maintain an incident angle of around 30°to the planar surface of the capsule 12. If the incident angle of the blades is greater than around 35° or less than around 25° there is a tendency for the capsule to deform under the action of the blades rather than be pierced. Within the ranges of the invention, a hole size of between 0.95 and 1.05mm diameter can be achieved, which allows an optimal flow rate for a standard espresso grind.

The gutter 9 receives a ring shaped or annular seal that is preferably made of paper, fibre or cork or polystyrene. The seal can be substantially in the range of 0.1-0.3mm thick. A particularly preferred seal comprises 120 gm⁻², 0.2 mm thick paper. A polypropylene material seal of 0.1mm also provides a good seal. The seal is retained in position either by a glue or by a plurality of protrusions or pips 10 formed on the side wall of the capsule spaced a short height above the flange. The pips can be formed by pushing out from the inside of the capsule and are substantially equidistantly disposed around the circumference of the capsule wall. An exemplary number of pips is 3, 6 or 8.

The capsule wall is provided with flutes 11 which extend over substantially the length of the side wall part 2 of the main body towards the pips 10. The flutes are recessed by between 0.1 and 0.3mm from the maximum outer radius of the side wall 2. The flutes may be between 0.5 and 10mm wide. The flutes may be substantially contiguously disposed in the side wall.

It has been surprisingly discovered that the provision of the flutes extending over a substantial part of the side wall 2 greatly increase the strength of the capsule, which becomes much less likely to deform. It has been established that a force of around 1N will deform prior art capsules manufactured by Nespresso^{®} or l"Or^{®}, whereas the fluted design requires 4N to deform. This greatly improves the ease of handling the capsule both in the manufacture of the capsule and its filling. It is also less likely to be damaged in transit. This will reduce wastage in capsule production and facilitate the wider use of aluminium capsules which are preferable to plastic with respect to their recyclability.

It has been surprisingly discovered that the provision of the flutes extending over a substantial part of the side wall greatly increase the strength of the capsule, which becomes much less likely to deform. This greatly improves the ease of handling the capsule both in the manufacture of the capsule and its storage as the holders tend to be stacked when stored.

In capsule of the invention the aluminium is approximately 0.1mm thick.

Although the capsule has been specifically described as being used to make espresso coffee, it would be possible to use the capsule to make other beverage capsules such as tea or chocolate.

## Claims

1. A capsule (1) in a coffee machine, which coffee machine has blades (21) for piercing the capsule when the capsule is retained in position for extraction of coffee in the coffee machine, the capsule having a generally frusto-conical form for the main body (2), with an upper end (3) and a lower end, said upper end (3) having a second frustoconical section (4) with a smaller diameter than the lower end, an annular flange (7) being provided at the end of main body (2) remote from the upper end (3), wherein an annular seal is provided on the annular flange, which seal faces toward the upper end (3), **characterised in that** the capsule is formed from aluminium, and the upper surface of the capsule is provided with a first planar surface on the second frustoconical section (4) disposed at an angle to the flange, the upper surface being provided with an annular protruding surface (10), which annular protruding surface (10) provides a steeper angle to the blades with respect to the flange than the first planar surface of the second frustoconical section (4) and wherein the blades maintain an incident angle of between 25° to 35° to the first planar surface of the second frustoconical section (4) of the capsule.

2. A capsule (1) according to Claim 1, wherein the annular surface (10) is raised from the surrounding plane of the capsule upper surface by between 0.15 and 0.35mm

3. A capsule (1) according to Claim 2, wherein the annular surface (10) is raised by 0.25mm.

4. A capsule (1) according to any one of Claims 1 to 3, wherein the angle of the annular surface (10) to the planar surface of the capsule is between 30 and 34° with the angle increasing from the centre to the to the edge of the capsule.

5. A capsule (1) according to any one of Claims 1 to 4, wherein the incident angle is 30°.

6. . A capsule (1) according to any one of Claims 1 to 5, wherein the capsule has a flange with first and second opposed sides, with the sealing element comprising a cellulose material, which sealing element is fixed to the flange on the first side, wherein the capsule is closed, when packed with coffee, by a foil adhered to a surface of the flange on the second side, wherein the effective surface of the flange on the second side has a width greater than 2mm.

7. A capsule (1) according to any one of Claims 1 to 6, wherein the capsule wall is provided with flutes (11) which extend over substantially the length of the side wall part (2) of the main body.

8. A capsule (1) according to Claim 7, wherein the flutes are recessed by between 0.1 and 0.3mm from the maximum outer radius of the side wall (2).

9. A capsule (1) according to Claim 7 or Claim 8, wherein, the flutes may be between 0.5 and 10mm wide.

## Patentansprüche

1. Kapsel (1) in einer Kaffeemaschine, wobei die Kaffeemaschine Messer (21) zum Durchstechen der Kapsel, wenn die Kapsel zum Extrahieren von Kaffee in der Kaffeemaschine in Position gehalten ist, aufweist, wobei die Kapsel eine allgemein kegelstumpfförmige Form mit einem oberen Ende und einem unteren Ende für den Hauptkörper (2) aufweist, wobei das obere Ende (3) einen zweiten kegelstumpfförmigen Abschnitt (4) mit einem kleineren Durchmesser als das untere Ende aufweist und an dem von dem oberen Ende (3) entfernten Ende des Hauptkörpers (2) ein Ringflansch (7) bereitgestellt ist,
wobei auf dem Ringflansch eine ringförmige Dichtung bereitgestellt ist, deren Dichtung dem oberen Ende (3) zugewandt ist,
**dadurch gekennzeichnet, dass** die Kapsel aus Aluminium gebildet ist und die obere Oberfläche der Kapsel mit einer ersten ebenen Oberfläche auf dem zweiten kegelstumpfförmigen Abschnitt (4) versehen ist, die unter einem Winkel zu dem Flansch angeordnet ist, wobei die obere Oberfläche mit einer ringförmigen vorstehenden Oberfläche (10) versehen ist, wobei die ringförmige vorstehende Oberfläche (10) einen steileren Winkel zu den Messern in Bezug auf den Flansch bereitstellt als die erste ebene obere Oberfläche des zweiten kegelstumpfförmigen Abschnitts (4) und wobei die Messer einen Anstellwinkel von zwischen 25° bis 35° zu der ersten ebenen Oberfläche des zweiten kegelstumpfförmigen Abschnitts (4) der Kapsel einhalten.

2. Kapsel (1) nach Anspruch 1 wobei die ringförmige Oberfläche (10) um zwischen 0,15 und 0,35 mm gegenüber der umgebenden Ebene der oberen Oberfläche der Kapsel erhöht ist.

3. Kapsel (1) nach Anspruch 1, wobei die ringförmige Oberfläche (10) um 0,25 mm erhöht ist.

4. Kapsel (1) nach einem der Ansprüche 1 bis 3, wobei der Winkel der ringförmigen Oberfläche (10) zu der ebenen Oberfläche der Kapsel zwischen 30 und 34° beträgt, wobei der Winkel von der Mitte zu dem Rand der Kapsel hin zunimmt.

5. Kapsel (1) nach einem der Ansprüche 1 bis 4, wobei der Anstellwinkel 30° beträgt.

6. Kapsel (1) nach einem der Ansprüche 1 bis 5, wobei die Kapsel einen Flansch mit einer ersten und einer zweiten Seite, die einander gegenüberliegen, aufweist, wobei das Dichtungselement ein Zellulosematerial umfasst und das Dichtungselement auf der ersten Seite an dem Flansch befestigt ist, wobei die Kapsel, wenn sie mit Kaffee gestopft ist, durch eine auf der zweiten Seite an eine Oberfläche des Flanschs geklebte Folie verschlossen ist, wobei die wirksame Oberfläche des Flanschs auf der zweiten Seite eine Breite von mehr als 2 mm aufweist.

7. Kapsel (1) nach einem der Ansprüche 1 bis 6, wobei die Kapselwand mit Rillen (11) versehen ist, die sich über im Wesentlichen die Länge des Seitenwandteils (2) des Hauptkörpers erstrecken.

8. Kapsel (1) nach Anspruch 7, wobei die Rillen um zwischen 0,1 und 0,3 mm von dem größten äußeren Radius der Seitenwand (2) zurückgesetzt sind.

9. Kapsel (1) nach Anspruch 7 oder Anspruch 8, wobei die Rillen zwischen 0,5 und 10 mm breit sein können.

## Revendications

1. Capsule (1) dans une cafetière, laquelle cafetière a des lames (21) pour percer la capsule lorsque la capsule est retenue en position pour l'extraction de café dans la cafetière, la capsule ayant une forme généralement tronconique pour le corps principal (2), avec une extrémité supérieure (3) et une extrémité inférieure, ladite extrémité supérieure (3) ayant une seconde section tronconique (4) avec un diamètre inférieur à l'extrémité inférieure, une bride annulaire (7) étant prévue à l'extrémité du corps principal (2) à distance de l'extrémité supérieure (3), dans laquelle un joint annulaire est prévu sur la bride annulaire, lequel joint est tourné vers l'extrémité supérieure (3), **caractérisée en ce que** la capsule est formée d'aluminium, et la surface supérieure de la capsule est pourvue d'une première surface plane sur la seconde section tronconique (4) disposée à un angle par rapport à la bride, la surface supérieure étant pourvue d'une surface saillante annulaire (10), laquelle surface saillante annulaire (10) fournit un angle plus raide aux lames par rapport à la bride que la première surface plane de la seconde section tronconique (4) et dans laquelle les lames maintiennent un angle incident compris entre 25° et 35° à la première surface plane de la seconde section tronconique (4) de la capsule.

2. Capsule (1) selon la revendication 1, dans laquelle la surface annulaire (10) est surélevée du plan environnant de la surface supérieure de capsule d'environ 0,15 à 0,35 mm.

3. Capsule (1) selon la revendication 2, dans laquelle la surface annulaire (10) est surélevée de 0,25 mm.

4. Capsule (1) selon l'une quelconque des revendications 1 à 3, dans laquelle l'angle de la surface annulaire (10) à la surface plane de la capsule est compris entre 30 et 34° avec l'angle augmentant du centre au bord de la capsule.

5. Capsule (1) selon l'une quelconque des revendications 1 à 4, dans laquelle l'angle incident est de 30°.

6. Capsule (1) selon l'une quelconque des revendications 1 à 5, dans laquelle la capsule a une bride avec des premier et second côtés opposés, avec l'élément d'étanchéité comprenant un matériau de cellulose, lequel élément d'étanchéité est fixé à la bride sur le premier côté, dans laquelle la capsule est fermée, lorsqu'elle est remplie de café, par une feuille collée à une surface de la bride sur le second côté, dans laquelle la surface effective de la bride sur le second côté a une largeur supérieure à 2 mm.

7. Capsule (1) selon l'une quelconque des revendications 1 à 6, dans laquelle la paroi de capsule est pourvue de cannelures (11) qui s'étendent sur essentiellement la longueur de la partie de paroi latérale (2) du corps principal.

8. Capsule (1) selon la revendication 7, dans laquelle les cannelures sont en retrait d'une distance comprise entre 0,1 et 0,3 mm du rayon externe maximal de la paroi latérale (2).

9. Capsule (1) selon la revendication 7 ou revendication 8, dans laquelle les cannelures peuvent être de 0,5 à 10 mm de large.
